# EUROPEAN PATENT SPECIFICATION

(11) **EP 3 861 393 B1**
(45) Date of publication and mention of the grant of the patent: **31.12.2025**
(21) Application number: 19791080.5
(22) Date of filing: 03.10.2019
(51) Int. Cl.: G02B 6/44, G02B 6/52

(54) **STRAIN RELIEF DEVICE IN FIBER OPTIC CABINETS**
ZUGENTLASTUNGSVORRICHTUNG ZUR VERWENDUNG FÜR FASEROPTISCHE SCHRÄNKE
DISPOSITIF DE DÉCHARGE DE CONTRAINTE DESTINÉ À ÊTRE UTILISÉ DANS DES ARMOIRES À FIBRES OPTIQUES

(30) Priority: 04.10.2018 US 201862741534 P; 29.11.2018 US 201862772716 P
(43) Date of publication of application: 11.08.2021
(73) Proprietor: Corning Research & Development Corporation, Corning, New York 14831 (US)
(72) Inventor: GAJEK, Max, 93-590 Lodz (PL); STRUNCK, Sven, 13129 Berlin (DE)
(74) Representative: Elkington and Fife LLP
(86) International application number: PCT/US2019/054436
(87) International publication number: WO 2020/072740

(56) References cited:
- EP-A1- 2 148 231
- EP-A1- 3 285 105
- GB-A- 2 339 481
- US-A- 5 793 921
- US-A1- 2008 079 341
- GABO SYSTEMTECHNIK GMBH: "Network level 3 and 4 - speed-pipe system - fibre-to-the-X.", May 2018 (2018-05-01), Niederwinkling (DE), XP055655238, Retrieved from the Internet <URL:https://www.gabocom.de/fileadmin/downloadcenter/downloads/secure/Produktbroschueren/Englisch/gabocom_product-brochure.pdf> [retrieved on 20200107]

## Description

### BACKGROUND

The present disclosure generally relates to fiber optic cable management and handling of fiber optic cables inside of cabinets, and particularly strain relief devices for use in fiber optic cabinets.

Strain relief of fiber optic cables inside cabinets typically occurs using components, which are directly mounted inside the cabinet. These components are often integral to and fixed the cabinet itself. Accordingly, there is a clear need for strain relief devices for fiber optic cabinets that provide improvements over existing components. US5793921A discloses a kit and method for converting a conductive cable closure to a fiber optic cable closure.
GB2339481 A discloses a holding device for optical fibre cable sheath and strength member. EP2148231 A1 discloses a furcation adapter for optical fibers, with a plate-like basic body, a first strain relief device being fixed detachably on a first side of the plate-like basic body, and a second strain relief device.

### SUMMARY

The present disclosure is directed toward devices that provide strain relief for ducts installed in fiber optic cabinets. In accordance with one aspect of the invention, there is provided a strain relief member as defined in claim 1. In accordance with one aspect of the invention, a strain relief device for use in a fiber optic cabinet is defined in claim 4.

In accordance with another aspect of the invention, a method of installing a strain relief device for a fiber optic cabinet having a cable with an outer sheath and a partially exposed core element, is as defined in claim 13.

### BRIEF DESCRIPTION OF THE DRAWINGS

FIG. 1 is a perspective view of a first strain relief member at an initial stage of positioning onto a duct, a gasstop, and a cable.
FIG. 2 is a perspective view of the first strain relief member shown in FIG. 1 after the initial stage of positioning and a second strain relief member, before coupling with the first relief member.
FIG. 3 is a perspective view of the first strain relief member shown in FIG. 1 after final positioning and the second strain relief member shown in FIG. 2, after coupling with the first relief member.

It is to be understood that both the foregoing general description and the following detailed description are merely exemplary and intended to provide an overview or framework to understanding the nature and character of the claims. The accompanying drawings are included to provide a further understanding, and are incorporated in and constitute a part of this specification. The drawings illustrate one or more embodiments, and together with the description explain the principles and operation of the various embodiments.

### DESCRIPTION

In the following detailed description, reference is made to the accompanying drawings, which form a part hereof. In the drawings, similar symbols may be used to identify similar components, unless context dictates otherwise.

Moreover, the illustrative embodiments described in the detailed description, drawings, and claims are not meant to be limiting. Other embodiments may be utilized, and other changes may be made.

Also, it will be readily understood that the aspects of the present disclosure, as generally described herein, and illustrated in the various accompanying figures, can be arranged, substituted, combined, separated, and designed in a wide variety of different configurations, all of which are explicitly contemplated herein. It will be understood that when an element is referred to as being "on", "attached" to, "connected" to, "coupled" with, "contacting", etc., another element, it can be directly on, attached to, connected to, coupled with or contacting the other element or intervening elements may also be present. In contrast, when an element is referred to as being, for example, "directly on", "directly attached" to, "directly connected" to, "directly coupled" with or "directly contacting" another element, there are no intervening elements present.

It will be further understood that, although the terms "first", "second", etc. may be used herein to describe various elements, components, etc., these elements, components, etc. should not be limited by these terms. These terms are only used to distinguish one element, component, etc. from another element, component, etc. Thus, a "first" element or component discussed below could also be termed a "second" element or component without departing from the teachings of the present invention. In addition, the sequence of operations (or steps) is not limited to the order presented in the claims unless specifically indicated otherwise.

Disclosed herein are devices related to duct and cable management and handling of ducts and cables inside fiber optic cabinets. In preferred embodiments, the devices disclosed herein allow for strain relief of cables as well as the transfer of forces directly to ducts installed inside the cabinet. The device installation is preferably free of any connection to other cabinet components. Currently, cables are strain relieved through use of elements mounted directly inside the cabinet, that are integral and non-movable with respect to the fiber optic cabinet. Thus, the disclosed embodiments also provide for more flexibility in terms of duct and cable management and positioning of furcation inside cabinets.

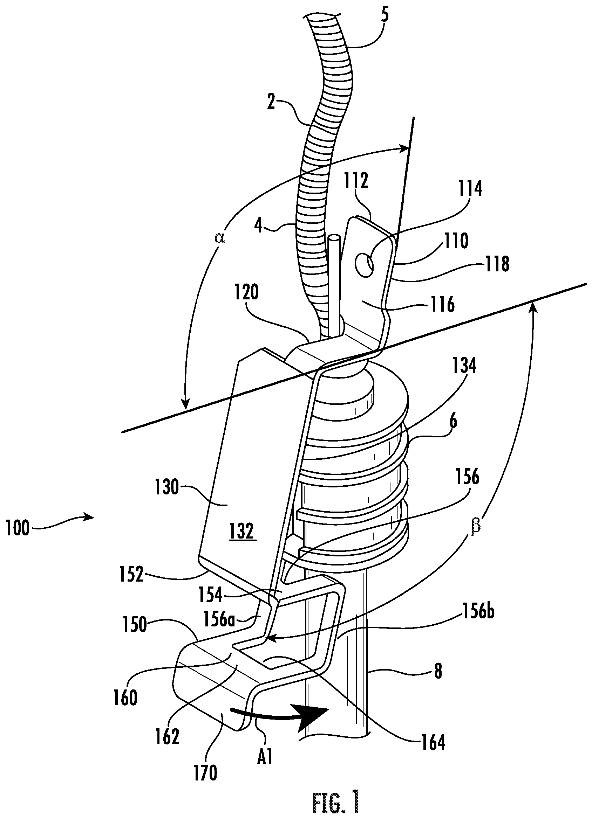

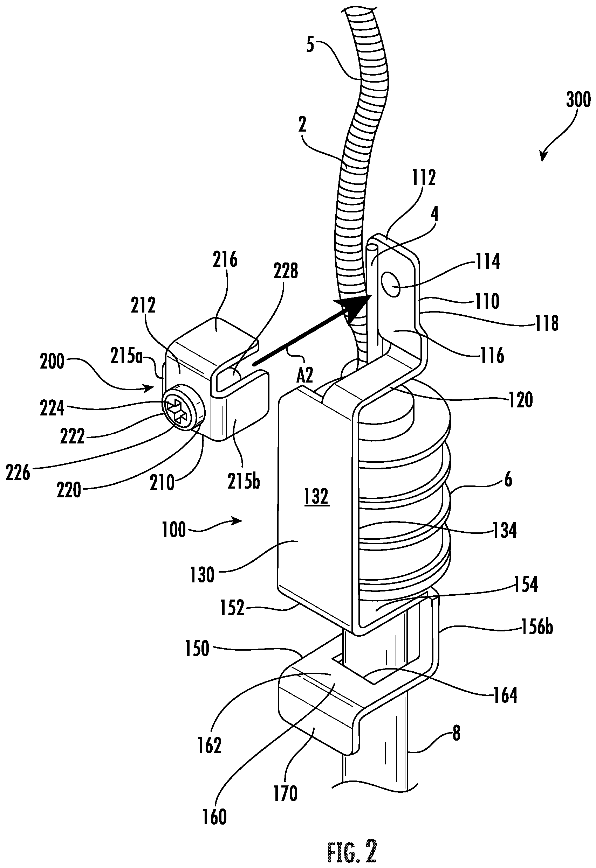

As shown in FIGs. 2-3, the strain relief device 300 includes a first strain relief member 100 and a second strain relief member 200. The device 300 is configured strain relieve a portion of cable above a point of furcation, regardless of the position of the device with respect to the fiber optic cabinet in which the device is installed. The device 300 is particularly designed to be installed onto a duct 8. The strain relief device 300 is configured for coupling with a cable 2, having a core element 4, which has been partially exposed/removed from the cable 2, and an outer sheath 5. The cable 2 is disposed partially within a gasstop 6 and the duct 8, as particularly shown in FIG. 1.

Referring to FIG. 1, the first strain relief member 100, includes a connector plate 110, a medial plate 130, and a cutting member 150. The connector plate 110 includes a first plate section 112 and a second plate section 120 integrally connected to the first plate section 112. The first plate section 112 has a plate aperture 114 defined therein, a front surface 116, and a rear surface 118. The second plate section 120 is angularly positioned with respect to the first section 112 at an angle α.

During an initial step of installation, shown in FIG. 1, the first plate section 112 of the first strain relief member 100 is positioned adjacent to the core element 4 of the cable 2 and a portion of the second plate section 120 is positioned on the gasstop 6. The medial plate 130 is integrally connected and angularly positioned with respect to the second plate section 120. The medial plate 130 includes a front surface 132 and a rear surface 134. The angular position of the medial plate 130 is such that the rear surface 134 of the medial plate 130 is positioned adjacent to and along the length of the gasstop 6. The angular position of the medial plate 130 during the initial step of installation is defined at an angle β with respect to a top surface 121 of the second plate section 120 and the front surface 132 of the medial plate 150.

The cutting member 150 includes an upper section 152 and a lower section 160. The upper section 152 is integrally connected to the medial plate 130 by an upper extending portion 154. The upper extending portion 154 includes a cutting surface 156. Extending from the upper extending portion 154 are two arms 156a, 156b. Each arm 156a, 156b first extends laterally away from the upper extending portion 154, then downwardly, and finally toward a lower section 160.

The lower section preferably includes a lower extending portion 162 with a lower cutting surface 164. To facilitate positioning of the cutting member 150 onto a duct 8, the cutting member 150 also includes a positioning element 170. The positioning element 170 is integrally connected to the lower extending portion 162. During installation, a user may push on the positioning element 170 in the direction shown by arrow A1 in FIG. 1.

FIG. 2 illustrates how the first strain relief member 100 is installed onto the duct 8, while being positioned adjacent to the gasstop 6 and the cable 2 and onto the duct 8. Here, the angular position of the medial plate 130 has changed such that the rear surface 134 of the plate 130 is adjacent to and positioned along the full length of the gasstop 6. The medial plate is thus preferably configured to extend substantially perpendicular with respect to the second plate section 120. The position of the cutting member 150 has changed such that the upper extending portion 154 and the lower extending portion 162 are positioned adjacent to the duct 8 with the lower cutting surface 164 facilitating installation of the cutting member 150 onto a duct 8.

FIG. 2 further illustrates the positioning of the second strain relief member 200 before installation. The second strain relief member 200 includes a member body 210, having a wall 212, and a plurality of arms 214 integrally connected to the wall 212. The plurality of arms 214 extends laterally from the member body 210 such that a cavity 218 is formed in the second strain relief member 200. The plurality of arms 214 includes at least side arms 215a, 215b, and a top arm 216. A bottom arm (not shown) may also be included. Defined in the wall 114 is an opening 220 that holds a connection element 222. The connection element 222 is preferably a screw that includes a head 224 with a slotted area 226 and a shank 228, including threads (not shown). The shank 228 is positionable within the aperture 114 of the first strain relief member 100, as indicated by arrow A2. The second strain relief member 200 is positioned such that the core element 4 of the cable 2 will be held between the wall 212 and the connector plate 110, upon the final step of installation.

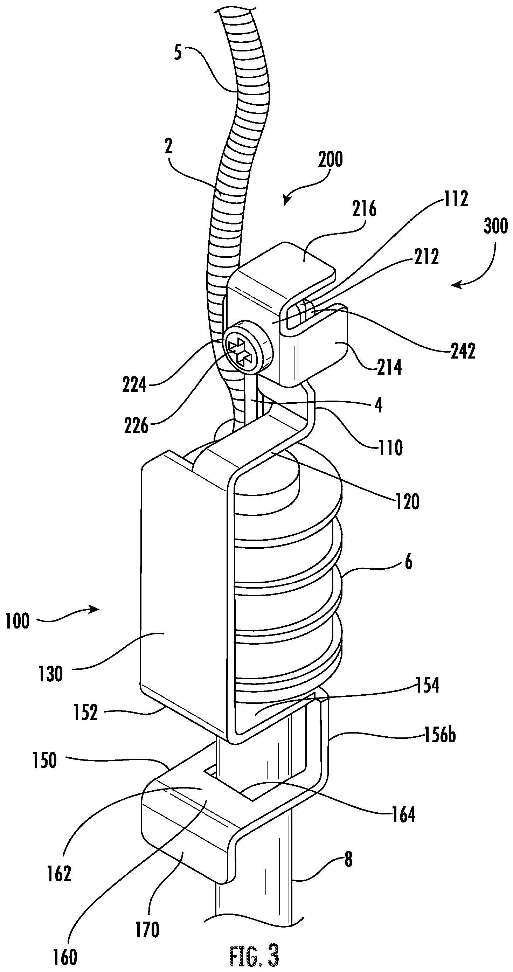

FIG. 3 shows the device 300 in its fully installed form, after the final step of installation. The position of the first strain relief member 100 is substantially similar to the position shown in FIG. 2. The second strain relief member 200, however, is now positioned such that the core element 4 of the cable 2 is held securely between the wall 212 of the first strain relief member 100 and the first plate section 112 of the connector plate 110. The shank 228 of the connection element 222 is routed through the plate aperture 114 (FIG. 2). A screw may be held in place, using corresponding threads located in the shank 228 and the plate aperture 114. Alternatively, the shank 228 may be held in place using a nut 242.

It will be apparent to those skilled in the art that various modifications and variations can be made to the embodiment disclosed herein without departing from the scope of the disclosure. Other embodiments of the present disclosure will be apparent to those skilled in the art from consideration of the specification and practice of the present disclosure. It is intended that the specification and examples be considered as exemplary only, with a true scope of the present disclosure being indicated by the following claims**.**

## Claims

1. A strain relief member (100) for use in a fiber optic cabinet, comprising:
a connector plate (110) with a first plate section (112) having a plate aperture (114) and a second plate section (120) integral with the first plate section (112), the second plate section (120) being angularly positioned with respect to the first plate section (112),
a medial plate (130) integrally connected to the second plate section (120) of the connector plate (110), the medial plate (130) being configured to extend substantially perpendicular to the second plate section (120); and
a cutting member (150) integral with the medial plate (130), the cutting member (150) having an upper section (152) and a lower section (160), with one of the upper section (152) and the lower section (160) including a cutting surface (156, 164) configured to cut into a duct,
wherein the cutting member (150) further comprises an upper extending portion (154) that includes the cutting surface (156),
**characterized in that** two arms (156a, 156b) extend from the upper extending portion (154) and each arm (156a, 156b) extends laterally away from the upper extending portion (154), then downwardly, and toward the lower section (160) of the cutting member (150).

2. The strain relief member (100) of claim 1, wherein the upper section (152) and the lower section (160) include a cutting surface (156, 164) configured to cut into the duct.

3. The strain relief member (100) of claim 1 or claim 2, further comprising a positioning element (170) integrally connected to the lower section (160).

4. A strain relief device (300) for use in a fiber optic cabinet, comprising:
a first strain relief member (100) according to any of claims 1 to 3; and
a second strain relief member (200) including a member body having a wall with an opening and a connection element disposed within the opening, wherein the second strain relief member (200) and the first strain relief member (100) are configured to connect to each other.

5. The strain relief device (300) of claim 4, wherein the connection element is a screw.

6. The strain relief device (300) of claim 5, wherein the screw is positionable in the plate aperture (114) of the connector plate (110).

7. The strain relief device (300) of any of claims 4-6, wherein the upper section (152) and the lower section (160) of the cutting member (150) each includes a cutting surface (156, 164).

8. The strain relief device (3000 of any of claims 4 to 7,
wherein the connector plate (110) is positionable onto a gasstop adjacent to a partially exposed core element of a cable,
wherein a medial plate (130) is angularly positionable adjacent to the gasstop, and
wherein the cutting member is (150) positionable onto a duct such that a surface of the cutting member (150) cuts into the duct.

9. The strain relief device (300) of any of claims 4-6, wherein when mated the connector plate (110) and the second strain relief member (200) are configured to hold a core element of a fiber optic cable.

10. The strain relief device (300) of claim 9, wherein at least a portion of the second strain relief member (200) is configured to extend across a surface of the gasstop.

11. The strain relief device (300) of any of claims 4-6, wherein the second strain relief member (200) comprises a plurality of arms (214, 215a, 215b, 216).

12. The strain relief device (300) of claim 11, wherein the plurality of arms (214, 215a, 215b, 216) is configured to form a cavity (218).

13. A method of installing a strain relief device (300) for a fiber optic cabinet having a cable (2) with an outer sheath (5) and a partially exposed core element (4), the method comprising:
providing a strain relief device (300), comprising:
a first strain relief member (100) including:
a connector plate (110) with a first plate section (112) having a plate aperture (114) and a second plate section (120) integral with the first plate section (112), the second plate section (120) being angularly positioned with respect to the first plate section (112);
a medial plate (130) integral with the second plate section (120) of the connector plate (110) and configured to extend substantially perpendicular to the second plate section (120); and
a cutting member (150) integral with the medial plate (130), the cutting member (150) having an upper section (152) and a lower section (160), with at least one of the upper section (152) and the lower section (160) including a cutting surface (156, 164); and
a second strain relief member (200) including a member body (210) having a wall (212) with an opening (220) and a connection element (222) disposed within the opening (220), wherein the second strain relief member (200) and the first strain relief member (100) are configured to connect to each other;
positioning the connector plate (110) of the first strain relief member (100) onto a gasstop and adjacent to the partially exposed core element of the cable;
angularly positioning the medial plate (130) of the first strain relief member (100) adjacent to the gasstop;
positioning the cutting member (150) of the first strain relief member (100) onto a duct such that a surface of the cutting member (150) cuts into the duct;
routing the connection element of a second strain relief member (200) though the plate aperture (114) of the connector plate (110);
threading the connection element into the plate aperture (114) or a nut; and
sandwiching the partially exposed core element between a wall of the second strain relief member (200) and the connector plate (110) of the first strain relief member (100).

14. The method of claim 13, wherein the strain relief device (300) is a strain relief device (300) according to any of claims 4 to 12.

## Patentansprüche

1. Zugentlastungsbauteil (100) zur Verwendung in einem faseroptischen Schrank, umfassend:
eine Verbinderplatte (110) mit einem ersten Plattenabschnitt (112), der einen Plattendurchlass (114) aufweist, und einem zweiten Plattenabschnitt (120), der einstückig mit dem ersten Plattenabschnitt (112) ist, wobei der zweite Plattenabschnitt (120) in Bezug auf den ersten Plattenabschnitt (112) winkelig positioniert ist,
eine mittlere Platte (130), die einstückig mit dem zweiten Plattenabschnitt (120) der Verbinderplatte (110) verbunden ist, wobei die mittlere Platte (130) dazu konfiguriert ist, sich im Wesentlichen senkrecht zu dem zweiten Plattenabschnitt (120) zu erstrecken; und
ein Schneidbauteil (150), das einstückig mit der mittleren Platte (130) ist, wobei das Schneidbauteil (150) einen oberen Abschnitt (152) und einen unteren Abschnitt (160) aufweist, wobei einer von dem oberen Abschnitt (152) und dem unteren Abschnitt (160) eine Schneidoberfläche (156, 164) beinhaltet, die dazu konfiguriert ist, in einen Kanal zu schneiden,
wobei das Schneidbauteil (150) ferner einen oberen sich erstreckenden Teil (154) umfasst, der die Schneidoberfläche (156) beinhaltet,
**dadurch gekennzeichnet, dass** sich zwei Arme (156a, 156b) von dem oberen sich erstreckenden Teil (154) erstrecken und sich jeder Arm (156a, 156b) seitlich weg von dem oberen sich erstreckenden Teil (154), dann nach unten und zu dem unteren Abschnitt (160) des Schneidbauteils (150) erstreckt.

2. Zugentlastungsbauteil (100) nach Anspruch 1, wobei der obere Abschnitt (152) und der untere Abschnitt (160) eine Schneidoberfläche (156, 164) beinhalten, die dazu konfiguriert ist, in den Kanal zu schneiden.

3. Zugentlastungsbauteil (100) nach Anspruch 1 oder Anspruch 2, ferner umfassend ein Positionierungselement (170), das einstückig mit dem unteren Abschnitt (160) verbunden ist.

4. Zugentlastungsvorrichtung (300) zur Verwendung in einem faseroptischen Schrank, umfassend:
ein erstes Zugentlastungsbauteil (100) nach einem der Ansprüche 1 bis 3; und
ein zweites Zugentlastungsbauteil (200), beinhaltend einen Bauteilkörper, der eine Wand mit einer Öffnung aufweist, und ein Verbindungselement, das innerhalb der Öffnung angeordnet ist, wobei das zweite Zugentlastungsbauteil (200) und das erste Zugentlastungsbauteil (100) dazu konfiguriert sind, miteinander verbunden zu sein.

5. Zugentlastungsvorrichtung (300) nach Anspruch 4, wobei das Verbindungselement eine Schraube ist.

6. Zugentlastungsvorrichtung (300) nach Anspruch 5, wobei die Schraube in dem Plattendurchlass (114) der Verbinderplatte (110) positionierbar ist.

7. Zugentlastungsvorrichtung (300) nach einem der Ansprüche 4-6, wobei der obere Abschnitt (152) und der untere Abschnitt (160) des Schneidbauteils (150) jeweils eine Schneidoberfläche (156, 164) beinhalten.

8. Zugentlastungsvorrichtung (3000 nach einem der Ansprüche 4 bis 7,
wobei die Verbinderplatte (110) auf einem Gasstop benachbart zu einem teilweise freiliegenden Kernelement eines Kabels positionierbar ist,
wobei eine mittlere Platte (130) benachbart zu dem Gasstop winkelig positionierbar ist, und
wobei das Schneidbauteil (150) auf einem Kanal positionierbar ist, sodass eine Oberfläche des Schneidbauteils (150) in den Kanal schneidet.

9. Zugentlastungsvorrichtung (300) nach einem der Ansprüche 4-6, wobei, wenn zusammengefügt, die Verbinderplatte (110) und das zweite Zugentlastungsbauteil (200) dazu konfiguriert sind, ein Kernelement eines faseroptischen Kabels zu halten.

10. Zugentlastungsvorrichtung (300) nach Anspruch 9, wobei zumindest ein Teil des zweiten Zugentlastungsbauteils (200) dazu konfiguriert ist, sich über eine Oberfläche des Gasstopps zu erstrecken.

11. Zugentlastungsvorrichtung (300) nach einem der Ansprüche 4-6, wobei das zweite Zugentlastungsbauteil (200) eine Vielzahl von Armen (214, 215a, 215b, 216) umfasst.

12. Zugentlastungsvorrichtung (300) nach Anspruch 11, wobei die Vielzahl von Armen (214, 215a, 215b, 216) dazu konfiguriert ist, einen Hohlraum (218) zu bilden.

13. Verfahren zum Installieren einer Zugentlastungsvorrichtung (300) für einen faseroptischen Schrank, der ein Kabel (2) mit einer Außenhülle (5) und einem teilweise freiliegenden Kernelement (4) aufweist, wobei das Verfahren Folgendes umfasst:
Bereitstellen einer Zugentlastungsvorrichtung (300), umfassend:
ein erstes Zugentlastungsbauteil (100), beinhaltend:
eine Verbinderplatte (110) mit einem ersten Plattenabschnitt (112), der einen Plattendurchlass (114) aufweist, und einem zweiten Plattenabschnitt (120), der einstückig mit dem ersten Plattenabschnitt (112) ist, wobei der zweite Plattenabschnitt (120) in Bezug auf den ersten Plattenabschnitt (112) winkelig positioniert ist;
eine mittlere Platte (130), die einstückig mit dem zweiten Plattenabschnitt (120) der Verbinderplatte (110) und dazu konfiguriert ist, sich im Wesentlichen senkrecht zu dem zweiten Plattenabschnitt (120) zu erstrecken; und
ein Schneidbauteil (150), das einstückig mit der mittleren Platte (130) ist, wobei das Schneidbauteil (150) einen oberen Abschnitt (152) und einen unteren Abschnitt (160) aufweist, wobei zumindest einer von dem oberen Abschnitt (152) und dem unteren Abschnitt (160) eine Schneidoberfläche (156, 164) beinhaltet; und
ein zweites Zugentlastungsbauteil (200), beinhaltend einen Bauteilkörper (210), der eine Wand (212) mit einer Öffnung (220) aufweist, und ein Verbindungselement (222), das innerhalb der Öffnung (220) angeordnet ist, wobei das zweite Zugentlastungsbauteil (200) und das erste Zugentlastungsbauteil (100) dazu konfiguriert sind, miteinander verbunden zu sein;
Positionieren der Verbinderplatte (110) des ersten Zugentlastungsbauteils (100) auf einem Gasstop und benachbart zu dem teilweise freiliegenden Kernelement des Kabels;
winkeliges Positionieren der mittleren Platte (130) des ersten Zugentlastungsbauteils (100) benachbart zu dem Gasstop;
Positionieren des Schneidbauteils (150) des ersten Zugentlastungsbauteils (100) auf einem Kanal, sodass eine Oberfläche des Schneidbauteils (150) in den Kanal schneidet;
Leiten des Verbindungselements eines zweiten Zugentlastungsbauteils (200) durch den Plattendurchlass (114) der Verbinderplatte (110);
Einschrauben des Verbindungselements in den Plattendurchlass (114) oder eine Mutter;
und
Einfügen des teilweise freiliegenden Kernelements zwischen einer Wand des zweiten Zugentlastungsbauteils (200) und der Verbinderplatte (110) des ersten Zugentlastungsbauteils (100).

14. Verfahren nach Anspruch 13, wobei die Zugentlastungsvorrichtung (300) eine Zugentlastungsvorrichtung (300) nach einem der Ansprüche 4 bis 12 ist.

## Revendications

1. Élément de décharge de contrainte (100) destiné à être utilisé dans une armoire à fibres optiques, comprenant :
une plaque de connecteur (110) avec une première section de plaque (112) ayant une ouverture de plaque (114) et une seconde section de plaque (120) solidaire de la première section de plaque (112), la seconde section de plaque (120) étant positionnée angulairement par rapport à la première section de plaque (112),
une plaque médiane (130) reliée de manière solidaire à la seconde section de plaque (120) de la plaque de connecteur (110), la plaque médiane (130) étant configurée pour s'étendre sensiblement perpendiculairement à la seconde section de plaque (120) ; et
un élément de coupe (150) solidaire de la plaque médiane (130), l'élément de coupe (150) ayant une section supérieure (152) et une section inférieure (160), l'une de la section supérieure (152) et de la section inférieure (160) comprenant une surface de coupe (156, 164) configurée pour couper dans un conduit,
dans lequel l'élément de coupe (150) comprend en outre une partie d'extension supérieure (154) qui comprend la surface de coupe (156),
**caractérisé en ce que** deux bras (156a, 156b) s'étendent à partir de la partie d'extension supérieure (154) et chaque bras (156a, 156b) s'étend latéralement en éloignement de la partie d'extension supérieure (154), puis vers le bas, et vers la section inférieure (160) de l'élément de coupe (150).

2. Élément de décharge de contrainte (100) de la revendication 1, dans lequel la section supérieure (152) et la section inférieure (160) comprennent une surface de coupe (156, 164) configurée pour couper dans le conduit.

3. Élément de décharge de contrainte (100) de la revendication 1 ou la revendication 2, comprenant en outre un élément de positionnement (170) connecté de manière solidaire à la section inférieure (160).

4. Dispositif de décharge de contrainte (300) destiné à être utilisé dans une armoire à fibres optiques, comprenant :
un premier élément de décharge de contrainte (100) selon l'une quelconque des revendications 1 à 3 ; et
un second élément de décharge de contrainte (200) comprenant un corps d'élément présentant une paroi avec une ouverture et un élément de connexion disposé à l'intérieur de l'ouverture, dans lequel le second élément de décharge de contrainte (200) et le premier élément de décharge de contrainte (100) sont configurés pour se connecter l'un à l'autre.

5. Dispositif de décharge de contrainte (300) de la revendication 4, dans lequel l'élément de connexion est une vis.

6. Dispositif de décharge de contrainte (300) de la revendication 5, dans lequel la vis est positionnable dans l'ouverture de plaque (114) de la plaque de connecteur (110).

7. Dispositif de décharge de contrainte (300) de l'une quelconque des revendications 4 à 6, dans lequel la section supérieure (152) et la section inférieure (160) de l'élément de coupe (150) comprennent chacune une surface de coupe (156, 164).

8. Dispositif de décharge de contrainte (3000) de l'une quelconque des revendications 4 à 7, dans lequel la plaque de connecteur (110) peut être positionnée sur un stop gaz adjacent à un élément de cœur partiellement exposé d'un câble,
dans lequel une plaque médiane (130) peut être positionnée angulairement adjacente au stop gaz, et
dans lequel l'élément de coupe (150) est positionnable sur un conduit de telle sorte qu'une surface de l'élément de coupe (150) coupe dans le conduit.

9. Dispositif de décharge de contrainte (300) de l'une quelconque des revendications 4 à 6, dans lequel, lorsqu'ils sont accouplés, la plaque de connecteur (110) et le second élément de décharge de contrainte (200) sont configurés pour maintenir un élément de cœur d'un câble à fibre optique.

10. Dispositif de décharge de contrainte (300) de la revendication 9, dans lequel au moins une portion du second élément de décharge de contrainte (200) est configurée pour s'étendre à travers une surface du stop gaz.

11. Dispositif de décharge de contrainte (300) de l'une quelconque des revendications 4 à 6, dans lequel le second élément de décharge de contrainte (200) comprend une pluralité de bras (214, 215a, 215b, 216).

12. Dispositif de décharge de contrainte (300) de la revendication 11, dans lequel la pluralité de bras (214, 215a, 215b, 216) est configurée pour former une cavité (218).

13. Procédé d'installation d'un dispositif de décharge de contrainte (300) pour une armoire à fibres optiques ayant un câble (2) avec une gaine extérieure (5) et un élément de cœur partiellement exposé (4),
le procédé comprenant :
la fourniture d'un dispositif de décharge de contrainte (300), comprenant :
un premier élément de décharge de contrainte (100) comprenant :
une plaque de connecteur (110) avec une première section de plaque (112) ayant une ouverture de plaque (114) et une seconde section de plaque (120) solidaire de la première section de plaque (112), la seconde section de plaque (120) étant positionnée angulairement par rapport à la première section de plaque (112) ;
une plaque médiane (130) solidaire de la seconde section de plaque (120) de la plaque de connecteur (110) et configurée pour s'étendre sensiblement perpendiculairement à la seconde section de plaque (120) ; et
un élément de coupe (150) solidaire de la plaque médiane (130), l'élément de coupe (150) ayant une section supérieure (152) et une section inférieure (160), avec au moins l'une de la section supérieure (152) et de la section inférieure (160) comprenant une surface de coupe (156, 164) ; et
un second élément de décharge de contrainte (200) comprenant un corps d'élément (210) présentant une paroi (212) avec une ouverture (220) et un élément de connexion (222) disposé à l'intérieur de l'ouverture (220),
dans lequel le second élément de décharge de contrainte (200) et le premier élément de décharge de contrainte (100) sont configurés pour se connecter l'un à l'autre ;
le positionnement de la plaque de connecteur (110) du premier élément de décharge de contrainte (100) sur un stop gaz et adjacent à l'élément de cœur partiellement exposé du câble ;
le positionnement angulaire de la plaque médiane (130) du premier élément de décharge de contrainte (100) adjacent au stop gaz ;
le positionnement de l'élément de coupe (150) du premier élément de décharge de contrainte (100) sur un conduit de telle sorte qu'une surface de l'élément de coupe (150) coupe dans le conduit ;
l'acheminement de l'élément de connexion d'un second élément de décharge de contrainte (200) à travers l'ouverture de plaque (114) de la plaque de connecteur (110) ;
le vissage de l'élément de connexion dans l'ouverture de plaque (114) ou un écrou ; et
l'enserrement de l'élément de cœur partiellement exposé entre une paroi du second élément de décharge de contrainte (200) et la plaque de connecteur (110) du premier élément de décharge de contrainte (100).

14. Procédé de la revendication 13, dans lequel le dispositif de décharge de contrainte (300) est un dispositif de décharge de contrainte (300) selon l'une quelconque des revendications 4 à 12.
